# EUROPÄISCHE PATENTSCHRIFT

(11) **EP 2 072 841 B1**
(45) Veröffentlichungstag und Bekanntmachung des Hinweises auf die Patenterteilung: **26.07.2017**
(21) Anmeldenummer: 08171900.7
(22) Anmeldetag: 17.12.2008
(51) Int. Cl.: F16B 35/04, F16B 33/00, F16B 37/04, F16B 37/12

(54) **Verbindungsanordnung zur Verbindung eines Kunststoff-Bauteils mit einem weiteren Bauteil**
Connection assembly to connect a plastic component with another component
Agencement de liaison destiné à relier un composant en plastique et un autre composant

(30) Priorität: 21.12.2007 DE 202007018074 U
(43) Veröffentlichungstag der Anmeldung: 24.06.2009
(73) Patentinhaber: Mann + Hummel GmbH, 71638 Ludwigsburg (DE)
(72) Erfinder: Jainek, Herbert, 74074, Heilbronn (DE)

(56) Entgegenhaltungen:
- DE-A1- 10 139 169
- DE-B- 1 097 766
- DE-B- 1 097 766
- FR-A- 1 564 898
- FR-A- 2 780 457

## Beschreibung

### Technisches Gebiet

Die Erfindung bezieht sich auf eine Verbindungsanordnung zur Verbindung eines Kunststoff-Bauteils mit einem weiteren Bauteil aus Kunststoff, in einer Vorrichtung zur Verwendung in einem Kraftfahrzeug, nach dem Oberbegriff des Anspruches 1.

### Stand der Technik

Bekannt sind Kurbelgehäuse-Entlüftungseinrichtungen, beispielsweise aus der DE 196 42 219 A1, die zur Abscheidung von Öltröpfchen in Kurbelgehäusegasen in einem Gehäuse eine Wendel aufweisen, die von dem zu reinigenden Öl-Luft-Gemisch durchströmt werden muss. An den Wandungen der Wendel können sich die Öltröpfchen ablagern, die gereinigte Luft wird anschließend aus der Kurbelgehäuse-Entlüftungseinrichtung abgeleitet und dem Ansaugtrakt der Brennkraftmaschine zugeführt.

Aus der FR 1 564 898 A ist eine Verbindungsanordnung zur Verbindung eines Kunststoffbauteils mit einem weiteren Bauteil bekannt, bei dem eine Schraube in eine am Bauteil fest verankerte Mutter aufgenommen ist. Die FR 2 780 457 A zeigt eine Schraube mit einem integriertem Abstandshalter für die Befestigung eines Kunststoffes mit einer metallischen Grundplatte mit einem Distanzstück, wobei die Höhe des Distanzstückes etwas geringer ist als aus die Dicke des Teils: Der Schaft der Schraube enthält einen nicht mit Gewinde versehenen Abschnitt. Der DE 101 39 169 A1 ist eine Schraubverbindungen zweier Kunststoffteile zu entnehmen, bei der eine Gewindebuchse vorgesehen ist, deren Länge entlang einer Längsachse der Länge eines ersten Teileloches in einem ersten Kunststoffteil und der Länge eines weiteren Teileloches in einem weiteren Kunststoffteil entspricht und die am Umfang ein Rändel aufweist, das sich beim Einschrauben der metallenen Schraube in die metallene Gewindebuchse in das erste Kunststoffteil gräbt. In der Schrift DE 1097766 ist erwähnt, dass aus dem Stand der Technik bekannt sei, eine Metallmutter in ein Kunststoffteil einzupressen oder nachträglich in beim Herstellen des Kunststoffkörpers belassene Hohlräume Metallmuttern einzulegen.

Ferner wird auf die US 3,425,474, US 3,059,983 und DE 26 28 324 A1 hingewiesen, aus denen Verbindungsanordnungen bekannt sein, bei denen jeweils in einer Nut längsverschiebbare Nutensteine eingesetzt werden, um ein anderes Bauteil an einem Möbelteil, einem Werkzeugmäschinentisch oder Haushaltsausstattung zu befestigen.

Aufgrund ihrer motornahen Anordnung ist die Kurbelgehäuse-Entlüftungseinrichtung einer erhöhten thermischen Belastung ausgesetzt, was bei der Konstruktionseinrichtung, insbesondere der Materialwahl des Gehäuses berücksichtigt werden muss. Aus Gewichtsgründen ist man bestrebt, Kunststoff-Bauteile zu verwenden, beispielsweise für das Gehäuse der Kurbelgehäuse-Entlüftungseinrichtung, wobei verschiedene Kunststoff-Bauteile mittels geeigneter Verbindungsglieder, beispielsweise Schrauben und Muttern, miteinander verbunden werden. Die thermische Belastung kann zu einer Erweichung des Kunststoffmaterials führen, so dass insbesondere im Bereich der Verbindungen der Kunststoff-Bauteile die Gefahr besteht, dass die Verbindungskraft zu einem Fließen des Kunststoffes führt und dadurch die Verbindung geschwächt wird.

### Offenbarung der Erfindung

Der Erfindung liegt die Aufgabe zugrunde, ein Kunststoff-Bauteil einer Vorrichtung, die im motornahen Bereich eines Kraftfahrzeugs eingesetzt wird, mit einem weiteren Bauteil auch unter erhöhten thermischen Belastungen sicher und dauerhaft zu verbinden.

Diese Aufgabe wird erfindungsgemäß mit den Merkmalen des Anspruches 1 gelöst. Die Unteransprüche geben zweckmäßige Weiterbildungen an.

Die erfindungsgemäße Verbindungsanordnung dient zur Verbindung eines Kunststoff-Bauteils mit einem weiteren Bauteil, wobei die beiden Bauteile eine Vorrichtung bilden, die im motornahen Bereich eines Kraftfahrzeugs eingesetzt wird, beispielsweise ein Öl- oder Luftfilter oder Ölabscheider. Erfindungsgemäß ist vorgesehen, dass beide Bauteile, die miteinander zu verbinden sind, aus Kunststoff bestehen.

Die Verbindung erfolgt in einfacher Weise mittels einer Schraube und einer Mutter, wobei die Schraube in eine Ausnehmung im Kunststoff-Bauteil eingesetzt wird und die Mutter in eine Hinterschneidung im zweiten Bauteil. Erfindungsgemäß ist einteilig mit der Schraube oder der Mutter ein Eindrehanschlag ausgebildet, welcher zur Begrenzung der Eindrehtiefe der Schraube in die Mutter dient. Der Eindrehanschlag erlaubt demnach nur ein begrenztes Eindrehen, nach dem Erreichen des Anschlags ist ein weiteres Eindrehen und damit einhergehend eine weitere axiale Verkürzung des Abstandes zwischen dem Kopf der Schraube und der Mutter nicht möglich. Der Eindrehanschlag besteht zweckmäßigerweise wie die Schraube bzw. die Mutter aus Metall.

Diese Ausführung erlaubt eine Verbindung mit einer Begrenzung der Axialkraft zwischen den beiden Bauteilen der Vorrichtung. Die Begrenzung der Axialkraft wird mittels des Eindrehanschlages erreicht, der eine weitere Verkürzung des Abstandes zwischen Schraube und Mutter verhindert, so dass auch die Annäherung der beiden Bauteile zueinander auf den axialen Abstand zwischen dem Schraubenkopf und der Mutter begrenzt ist. Bei einer entsprechenden Wahl der Länge der Ausnehmung im Kunststoff-Bauteil und/oder der Geometrie im Bereich der Hinterschneidung am zweiten Bauteil, in der die Mutter aufgenommen ist, bezogen auf den kleinstmöglichen axialen Abstand zwischen Schraubenkopf und Mutter wird somit zuverlässig die gewünschte Begrenzung der zu übertragenden Axialkraft zwischen den Bauteilen erreicht. Damit ist auch die Gefahr eines Werkstofffließens insbesondere unter Bedingungen mit erhöhter thermischer Belastung ausgeschlossen oder zumindest reduziert. Dementsprechend ist eine dauerhafte und zuverlässige Verbindung zwischen den Bauteilen gewährleistet.

Gemäß einer vorteilhaften Weiterbildung ist der Eindrehanschlag als einteilig mit der Schraube ausgebildete, glattwandige Hülse ausgeführt, die sich aber nicht über die gesamte Länge der Schraube erstreckt. Vielmehr ist der der Schraubenstirnseite zugewandte Abschnitt mit einem Gewinde versehen, wobei im Übergang zwischen der Hülse und dem Gewinde ein stirnseitiger Eindrehanschlag gebildet ist, der in Anschlagsposition unmittelbar auf der Mutter aufliegt und somit die weitere Eindrehung verhindert. Die glattwandige Hülse hat zudem den weiteren Vorteil, dass die in dieser Weise ausgebildete Schraube ohne Gefahr eines Verkantens durch die Ausnehmung im Kunststoff-Bauteil geführt werden kann.

Grundsätzlich reicht es aber aus, als Eindrehanschlag beispielsweise lediglich einen Kragen oder dergleichen vorzusehen, der nur eine begrenzte axiale Ausdehnung besitzt und sich nicht wie eine Hülse axial über einen Großteil der Länge der Schraube erstreckt. Des Weiteren ist es auch möglich, den Eindrehanschlag an der Mutter vorzusehen, beispielsweise in Form einer Sacklochbohrung, die mit einem Innengewinde versehen ist, in das die Schraube eingedreht wird, wobei der Boden der Sacklochbohrung den Anschlag für das Gewinde der Schraube bildet. Eine andere Möglichkeit besteht darin, an der Mutter eine axial überstehende Hülse vorzusehen, durch die die einzudrehende Schraube hindurchgeführt wird, wobei die freie Stirnseite dieser Hülse den Eindrehanschlag bildet, an dem der Kopf der Schraube oder ein sonstiger radial überstehender Bund in Anlage gelangt.

Erfindungsgemäß ist die Mutter als Kulissenstein ausgeführt, die in eine Kulisse in dem zweiten Bauteil eingesetzt wird, wobei der Kulissenstein eine nichtrunde, beispielsweise quadratische oder rechteckige Gestalt aufweist, so dass ein Verdrehen des Kulissensteins in der Kulisse ausgeschlossen ist. Die Kulisse schließt den Kulissenstein in Achsrichtung der Schraubverbindung formschlüssig ein. Zweckmäßigerweise ist die Kulisse geschlossen ausgeführt und weist lediglich eine sich in Kulissenrichtung erstreckende, dem anderen Bauteil zugewandte Einschubnut auf, die den Durchtritt der Schraube zum Kulissenstein ermöglicht. Die Kulisse und der darin geführte Kulissenstein stellen eine kostengünstige Ausführung dar, die aus dem Stand der Technik bekannte Buchsen ersetzt, welche im Heißverfahren in das Kunststoff-Bauteil eingesetzt werden.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 einen Schnitt durch eine Vorrichtung mit zwei Kunststoff-Bauteilen, die über eine Verbindungsanordnung miteinander verbunden sind, welche aus einer Schraube und einer als Kulissenstein ausgebildeten Mutter besteht, wobei die Schraube einteilig mit einer glattwandigen Hülse ausgebildet ist und die Schraube benachbart zur Schraubenstirnseite mit einem Gewinde versehen ist,
Fig. 2 eine Draufsicht auf eine Kulisse im zweiten Kunststoff-Bauteil, in der der Kulissenstein aufgenommen ist,
Fig. 3 eine Ansicht eines Kunststoff-Bauteiles mit insgesamt drei Kulissen zur Aufnahme eines Kulissensteins,
Fig. 4 eine perspektivische Darstellung der Verbindungsanordnung, bestehend aus Schraube und Kulissenstein.

In den Figuren sind gleiche Bauteile mit gleichen Bezugszeichen versehen.

### Ausführungsform(en) der Erfindung

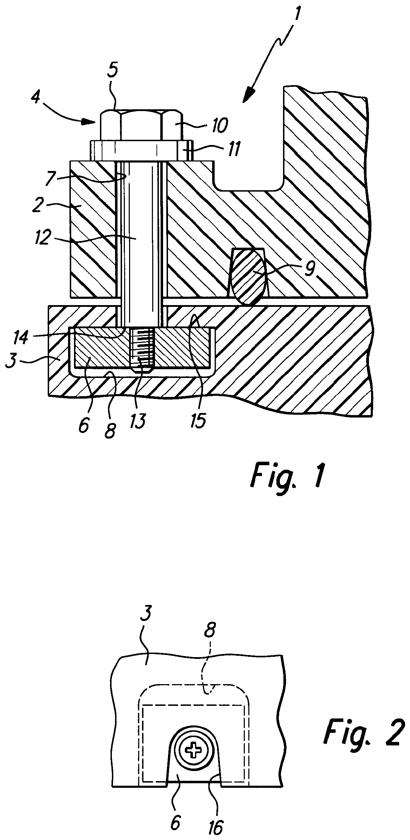

Bei der in Fig. 1 dargestellten Vorrichtung 1 handelt es sich beispielsweise um einen Ölfilter, einen Luftfilter, einen Ölabscheider oder dergleichen zum motornahen Einsatz in einem Kraftfahrzeug. Die Vorrichtung 1 umfasst zwei Bauteile 2 und 3, die beide als Kunststoff-Bauteil ausgeführt sind. Die beiden Kunststoff-Bauteile 2 und 3 werden mittels einer Verbindungsanordnung 4 miteinander verbunden, die eine Schraube 5 sowie eine Mutter 6 umfasst. Die Schraube 5 ist durch eine Ausnehmung 7 im ersten Kunststoff-Bauteil 2 geführt. Die Mutter 6 ist als Kulissenstein ausgebildet, der in eine Kulisse 8 im zweiten Kunststoff-Bauteil 3 eingesetzt und dort in Achsrichtung der Schraubverbindung 4 formschlüssig aufgenommen ist. Zwischen den Bauteilen 2 und 3 ist ein Dichtungselement 9 eingesetzt.

Die Schraube 5 ist als Bundschraube ausgeführt und weist unmittelbar am Schraubenkopf 10, der einen Mehrkant bildet, einen radial überstehenden Bund bzw. Kragen 11 auf, der in der Montageposition unmittelbar am zweiten Kunststoff-Bauteil 2 aufliegt. Des Weiteren ist die Schraube 5 mit einer Buchse oder Hülse 12 einteilig ausgebildet, die sich unmittelbar an den Bund 11 axial anschließt und gegenüber dem Bund 11 einen kleineren Radius aufweist. Die Wandung der Hülse 12 ist glatt ausgebildet, wodurch ein Einschieben in die Ausnehmung 7 im ersten Kunststoff-Bauteil 2 sowie das Drehen der Schraube in der Ausnehmung erleichtert wird. Axial erstreckt sich die Hülse 12 über einen Großteil der Länge der Schraube 5, zumindest aber über die axiale Länge der Ausnehmung 7. Ein kleinerer axialer Abschnitt der Schraube 5 ist benachbart zur freien Stirnseite als Gewinde 13 ausgeführt, das in ein Innengewinde im Kulissenstein 6 einzuschrauben ist. Die axiale Länge des Gewindes 13 ist erheblich kleiner als die axiale Länge der Hülse 12, beispielsweise kann die Hülse 12 das Gewinde 13 um ein Mehrfaches, zum Beispiel um das Vier- oder Fünffache übersteigen.

Das Innengewinde im Kulissenstein 6 ist als Durchgangsgewinde ausgebildet. Grundsätzlich ist aber auch eine Ausführung als Sacklochbohrung möglich, wobei der Boden der Sacklochbohrung einen Anschlag für die Schraube 5 bildet.

In der in Fig. 1 dargestellten montierten Position liegt die Stirnseite 14 der Hülse 12 unmittelbar auf der Oberseite 15 des Kulissensteins 6 auf. Damit ist ein Eindrehanschlag zur Begrenzung der Eindrehtiefe der Schraube in die Mutter realisiert. Wichtig ist hierbei der Metall auf Metall geführte Anschlag. Es bleibt ein definiertes Lösemoment erhalten. Die Eindrehtiefe wird durch das über die Hülse axial überstehende Schraubengewinde bestimmt.

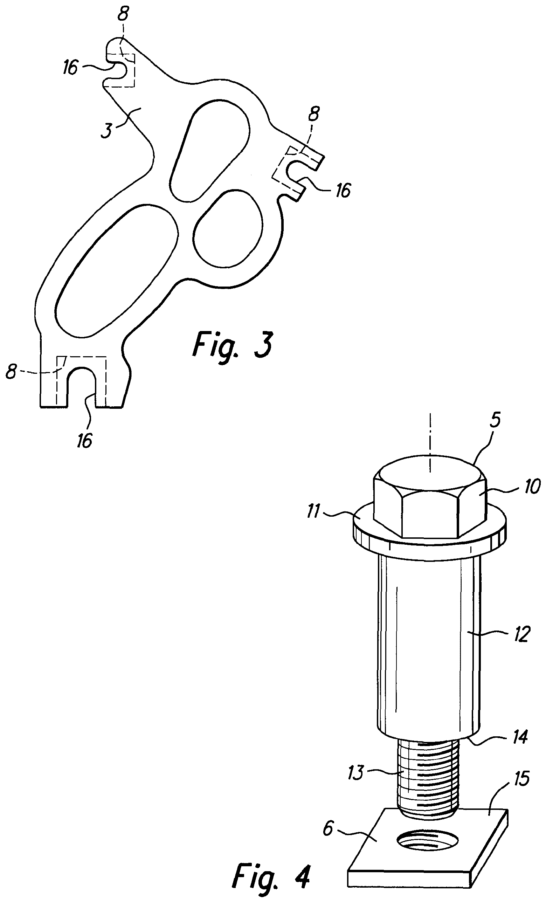

Wie Fig. 2 und 3 zu entnehmen, ermöglicht die Kulisse 8 im zweiten Kunststoff-Bauteil 3 in Achsrichtung der Schraubverbindung gesehen eine formschlüssige Aufnahme des Kulissensteins 6. Hierfür ist die Kulisse 8 geschlossen ausgebildet und weist lediglich eine Einschubnut 16 auf, die sich in Einschubrichtung des Kulissensteins erstreckt und eine Öffnung zum Einschrauben der Schraube 5 bildet. Wie Fig. 3 zu entnehmen, können eine Mehrzahl derartiger Kulissen 8 zur Aufnahme von Kulissensteinen am Kunststoff-Bauteil 3 vorgesehen sein, um eine gleichmäßige Kraftverteilung über den Umfang der Vorrichtung zwischen den beiden Kunststoff-Bauteilen zu erreichen.

## Patentansprüche

1. Verbindungsanordnung, für eine Vorrichtung (1), die im motornahen Bereich eines Kraftfahrzeugs eingesetzt wird, zur Verbindung eines Kunststoff-Bauteils (2) mit einem weiteren Bauteil (3), mit einer metallischen Schraube (5), die in eine Ausnehmung (7) im Kunststoff-Bauteil (2) eingesetzt wird, und einer metallischen Mutter (6), die zusammen eine Schraubverbindung (4) bilden, wobei einteilig mit der Schraube (5) oder der Mutter (6) ein Eindrehanschlag (14) zur Begrenzung der Eindrehtiefe der Schraube (5) in die Mutter (6) ausgebildet ist, **dadurch gekennzeichnet, dass** das weitere Bauteil (3) auch aus Kunststoff besteht und die Mutter (6) in eine Hinterschneidung im weiteren Bauteil (3) eingesetzt ist, wobei die Mutter (6) als Kulissenstein mit nicht-runder Gestalt ausgeführt ist, sodass ein Verdrehen in der Hinterschneidung ausgeschlossen ist, und der Kulissenstein in Achsrichtung der Schraubverbindung (4) formschlüssig in der Hinterschneidung des weiteren Bauteils (3) aufgenommen ist, und zwischen den Bauteilen (2, 3) ein Dichtungselement aufgenommen ist.

2. Verbindungsanordnung nach Anspruch 1, **dadurch gekennzeichnet, dass** der Eindrehanschlag (14) an einer einteilig mit der Schraube (5) ausgebildeten, glattwandigen Hülse (12) ausgebildet ist, wobei das Gewinde (13) der Schraube (5) benachbart zur Schraubenstirnseite angeordnet ist.

3. Verbindungsanordnung nach Anspruch 1, **dadurch gekennzeichnet, dass** der Eindrehanschlag als Sacklochbohrung in der Mutter (6) ausgeführt ist.

4. Verbindungsanordnung nach einem der Ansprüche 1 bis 3, **dadurch gekennzeichnet, dass** die Schraube (5) als Bundschraube mit im Bereich des Schraubenkopfes (10) radial überstehendem Bund (11) ausgeführt ist.

5. Vorrichtung, insbesondere zur Verwendung in einem Kraftfahrzeug, mit einem Kunststoff-Bauteil (2) und einem weiteren Bauteil (3) und einer Verbindungsanordnung (4) zur Verbindung des Kunststoff-Bauteils (2) mit dem weiteren Bauteil (3) nach einem der Ansprüche 1 bis 4.

6. Vorrichtung nach Anspruch 5, **gekennzeichnet durch** eine Ausführung als Ölfilter und/oder Abscheider.

## Claims

1. Connection arrangement, for an apparatus (1) which is inserted in the area close to the engine of a motor vehicle, for the connection of a plastic component (2) with another component (3), by means of a metallic bolt (5) which is inserted into a recess (7) in the plastic component (2), and a metallic nut (6) which form together a bolted connection (4), wherein a screw-in stop (14) for limiting the screw-in depth of the bolt (5) into the nut (6) is realized as one piece with the screw (5) or the nut (6), **characterized in that** the other component (3) is also made of plastic and that the nut (6) is inserted into an undercut in the other component (3), wherein the nut (6) is designed as sliding block with non-round shape so that a twisting in the undercut is excluded, and that the sliding block is positively received in axial direction of the bolted connection (4) in the undercut of the other component (3), and that a sealing element is received between the components (2, 3).

2. Connection arrangement according to claim 1, **characterized in that** the screw-in stop (14) is realized at a smooth-walled sleeve (12) designed as one piece with the bolt (5), wherein the thread (13) of the bolt (5) is disposed adjacent to the bolt front face.

3. Connection arrangement according to claim 1, **characterized in that** the screw-in stop is realized as blind hole boring in the nut (6).

4. Connection arrangement according to one of the claims 1 to 3, **characterized in that** the bolt (5) is designed as collar bolt with a collar (11) protruding radially in the area of the bolt head (10).

5. Apparatus, in particular for the use in a motor vehicle, with a plastic component (2) and another component (3) and a connection arrangement (4) for connecting the plastic component (2) with the other component (3) according to one of the claims 1 to 4.

6. Apparatus according to claim 5, **characterized by** an embodiment as oil filter and/or separator.

## Revendications

1. Dispositif d'assemblage pour un dispositif (1) monté dans la zone proche du moteur d'un véhicule automobile, destiné à relier un élément en matière plastique (2) avec un autre élément (3), au moyen d'une vis métallique (5) qui est insérée dans un évidement (7) ménagé dans l'élément en matière plastique (2) et d'un écrou métallique (6), ces deux pièces formant ensemble un raccord vissé (4), une butée de vissage (14) servant à limiter la profondeur de vissage (5) dans l'écrou (6) étant formée en un bloc avec la vis (5) ou l'écrou (6), **caractérisé en ce que** l'autre élément (3) est aussi réalisé en matière plastique et que l'écrou (6) est introduit dans une contre-dépouille située dans l'autre élément (3), l'écrou (6) étant exécuté en tant que coulisseau de forme non ronde de sorte que toute rotation dans la contre-dépouille soit exclue, **en ce que** le coulisseau est intégré de manière crabotée en sens axial du raccord vissé (4) dans la contre-dépouille de l'autre élément (3) et qu'un élément d'étanchéité est placé entre les éléments (2, 3).

2. Dispositif d'assemblage selon la revendication 1, **caractérisé en ce que** la butée de vissage (14) est exécutée sur une douille (12) à paroi lisse formée en un bloc avec la vis (5), le filet (13) de la vis (5) étant adjacent à la face frontale de la vis.

3. Dispositif d'assemblage selon la revendication 1, **caractérisé en ce que** la butée de vissage est exécutée en tant que trou borgne dans l'écrou (6).

4. Dispositif d'assemblage selon l'une des revendications 1 à 3, **caractérisé en ce que** la vis (5) est exécutée en tant que vis épaulée dotée d'un collet (11) en saillie en sens radial dans la zone de la tête de vis (10).

5. Dispositif, en particulier destiné à être utilisé dans un véhicule automobile, avec un élément en matière plastique (2) et un autre élément (3) et un dispositif d'assemblage (4) destiné à relier l'élément en matière plastique (2) à l'autre élément (3) selon l'une des revendications 1 à 4.

6. Dispositif selon la revendication 5, **caractérisé par** une version en tant que filtre à huile et/ou séparateur.
